# EUROPÄISCHE PATENTSCHRIFT

(11) **EP 3 538 792 B1**
(45) Veröffentlichungstag und Bekanntmachung des Hinweises auf die Patenterteilung: **08.03.2023**
(21) Anmeldenummer: 17790680.7
(22) Anmeldetag: 25.10.2017
(51) Int. Cl.: F16H 57/08, F16H 1/28

(54) **PLANETENGETRIEBE MIT IN EINEM GEHÄUSETEIL AUFGENOMMENEN HOHLRAD**
PLANETARY GEARBOX HAVING A RING GEAR ACCOMMODATED IN A HOUSING PART
ENGRENAGE PLANÉTAIRE MUNI D'UNE COURONNE LOGÉE DANS UNE PARTIE DE CARTER

(30) Priorität: 11.11.2016 DE 102016013395
(43) Veröffentlichungstag der Anmeldung: 18.09.2019
(73) Patentinhaber: SEW-Eurodrive GmbH & Co, 76646 Bruchsal (DE)
(72) Erfinder: HANNET, Stefan, 68723 Schwetzingen (DE)
(86) Internationale Anmeldenummer: PCT/EP2017/025318
(87) Internationale Veröffentlichungsnummer: WO 2018/086757

(56) Entgegenhaltungen:
- EP-A1- 0 239 556
- EP-A1- 2 913 561
- DE-A1- 2 310 288
- DE-A1-102015 202 161
- DE-U- 1 922 273
- US-A- 2 547 263
- US-A- 2 831 716
- US-A- 3 289 488

## Beschreibung

Die Erfindung betrifft ein Planetengetriebe mit in einem Gehäuseteil aufgenommenen Hohlrad.

Es ist allgemein bekannt, dass Planetengetriebe ein Hohlrad aufweisen.

Aus der DE 23 10 288 A1 ist als nächstliegender Stand der Technik eine Vorrichtung zur Axialfixierung eines Elements relativ zu einer Ausbuchtungen aufweisenden Trommel bekannt.

Aus der US 3 289 488 A ist eine Planetengetriebekonstruktion bekannt.

Aus der US 2 547 263 A ist ein Sprengring bekannt.

Aus der DE 10 2015 202 161 A1 ist eine Verbindungsanordnung bekannt.

Aus der EP 0 239 556 A1 ist eine Kopplung zwischen zwei Elementen bekannt.

Aus der GB 770 659 A ist eine Verbesserung bezüglich ringförmiger Sperren bekannt.

Aus der US 2 831 716 A ist eine lösbare Kupplung bekannt.

Aus der DE 19 22 273 U ist ein Sprengring bekannt.

Aus der DE 837 341 B ist eine Vorrichtung zum Sichern eines Maschinenteils auf einer Welle gegen axiale Verschiebung bekannt

Aus der US 2013 / 0 345 009 A1 ist eine Antriebsvorrichtung für ein Fahrzeug bekannt.

Aus der US 2 547 263 A ist ein Rückhaltering bekannt.

Aus der US 2 831 716 A ist eine lösbare Kupplung bekannt.

Aus der EP 2 913 561 A1 ist ein Motor-Planetengetriebe-Anordnung bekannt.

Der Erfindung liegt daher die Aufgabe zugrunde, ein Planetengetriebe einfach herstellbar zu machen.

Erfindungsgemäß wird die Aufgabe bei dem Planetengetriebe nach den in Anspruch 1 angegebenen Merkmalen gelöst.

Von Vorteil ist dabei, dass beim Einschieben des Hohlrads in die Aufnahmeöffnung des Gehäuseteils das Federelement in die Ringnut gedrückt wird und sich bei Erreichen der Ringnut des Gehäuseteils radial ausdehnt. Hierzu ist das Federelement kegelig ausführbar, wobei die Kegelspitze in Einführrichtung zeigt. Mittels des entspannten, also radial ausgedehnten, Federelements ist dann eine formschlüssige Verbindung bewirkt, da das Federelement in beiden Ringnuten zumindest teilweise hineinragt.

**Erfindungsgemäß** ist das Federelement ringartig ausgeführt.

**Bei einer vorteilhaften Ausgestaltung ist** das Federelement als Lochscheibe ausgeführt. Von Vorteil ist dabei, dass eine einfache Herstellung ermöglicht ist, insbesondere als Stanz-Biegeteil.

Bei einer vorteilhaften Ausgestaltung wächst der an einer jeweiligen axialen Position kleinste Radialabstandswert der Lochscheibe in axialer Richtung monoton an und der an einer jeweiligen axialen Position größte Radialabstandswert der Lochscheibe wächst in axialer Richtung monoton an. Von Vorteil ist dabei, dass bei Einschieben des Federelements zusammen mit dem Hohlrad ins Gehäuseteil entgegen der axialen Richtung das Federelement vorgespannt wird, ohne anzuschlagen.

Bei einer vorteilhaften Ausgestaltung wächst der an einer jeweiligen axialen Position kleinste Radialabstandswert der Lochscheibe entgegen der axialen Richtung monoton an und der an einer jeweiligen axialen Position größte Radialabstandswert der Lochscheibe wächst entgegen der axialen Richtung monoton an. Von Vorteil ist dabei, dass konstante Wandstärke in einfacher Weise ausführbar ist.

Bei einer vorteilhaften Ausgestaltung weist das Federelement eine konstante Wandstärke auf. Von Vorteil ist dabei, dass eine einfache Herstellung aus Stahlblech ausführbar ist.

Bei einer vorteilhaften Ausgestaltung ist das Federelement ein Stanz-Biegeteil, insbesondere ein aus Stahlblech gefertigtes Stanz-Biegeteil. Von Vorteil ist dabei, dass eine einfache Herstellung ermöglicht.

Bei einer vorteilhaften Ausgestaltung weist das Federelement an einer Umfangsposition einen radial durchgehenden Schlitz auf und/oder weist das Federelement an zumindest zwei Umfangspositionen jeweils einen radial durchgehenden Schlitz auf. Von Vorteil ist dabei, dass eine elastischere Ausführung in einfacher Weise erreichbar ist.

Bei einer vorteilhaften Ausgestaltung ist das Federelement axial vorgespannt, so dass also Hohlrad und Gehäuseteil axial auseinander gedrückt werden,
insbesondere so, dass einen Planetenradträger lagernde, im Gehäuseteil aufgenommene Lager gegen eine am Gehäuseteil ausgeformten Stufe gedrückt und vorgespannt werden. Von Vorteil ist dabei, dass mittels des Federelements das Hohlrad vom Gehäuseteil insbesondere entgegen der axialen Richtung gedrückt wird und somit auf eines der Lager gedrückt wird, welches auf ein zweites Lager drückt, das gegen die Stufe angedrückt und somit vorgespannt wird.

**Erfindungsgemäß** weist die im Gehäuseteil eingebrachte Ringnut an ihrem ersten axialen Endbereich eine Fase auf, insbesondere zum Einführen des Federelements in die am Gehäuseteil ausgebildete Ringnut. Von Vorteil ist dabei, dass die Fase ein einfaches Einfädeln des Federelements in die Ringnut des Gehäuseteils ermöglicht. Das Federelement wird also beim Entspannen in die Ringnut hinein von der Fase geführt.

Bei einer vorteilhaften Ausgestaltung weist die im Gehäuseteil eingebrachte Ringnut eine einen ebenen Bereich aufweisende Nutwand auf, wobei die Normalenrichtung des ebenen Bereichs zur axialen Richtung einen nicht verschwindenden Winkel aufweist, insbesondere einen Winkel zwischen 20° und 70°. Von Vorteil ist dabei, dass ein definiertes Führen beim Entspannen des Federelements ermöglicht wird.

Bei einer vorteilhaften Ausgestaltung ist das Federelement an seinem radialen Innenumfang und/oder Außenumfang verzahnt oder gerändelt ausgeführt, insbesondere wobei die Zähne der Verzahnung in Umfangsrichtung regelmäßig voneinander beabstandet sind. Von Vorteil ist dabei, dass eine verbesserte Sicherung des Federelements gegen Verdrehen in Umfangsrichtung bewirkbar ist.

Bei einer vorteilhaften Ausgestaltung ist das Federelement einerseits am Boden der in das Hohlrad eingebrachten Ringnut abgestützt und andererseits an der Fase der im Gehäuseteil angeordneten Ringnut. Von Vorteil ist dabei, dass ein stabiles Abstützen im Kantenbereich der Ringnut ermöglicht ist.

Bei einer vorteilhaften Ausgestaltung sind im Planetenradträger Planetenbolzen aufgenommen, auf denen jeweils ein mittels jeweiligem Lager drehbar gelagertes Planetenrad angeordnet ist,
wobei die Verzahnung des jeweiligen Planetenrads mit der Innenverzahnung des Hohlrades im Eingriff ist und andererseits mit der Verzahnung eines relativ zum Gehäuseteil drehbar gelagerten Sonnenrades im Eingriff ist,
insbesondere wobei das Sonnenrad koaxial zum Planetenradträger angeordnet ist. Von Vorteil ist dabei, dass ein Planetengetriebe in einfacher Weise herstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Querschnitt durch ein erfindungsgemäßes Planetengetriebe gezeigt, wobei das Hohlrad 3 mittels eines Federelements 2 mit einem Gehäuseteil 1 des Planetengetriebes formschlüssig verbunden ist.
In der Figur 2 ist das Hohlrad 3 vor dem formschlüssigen Verbinden mittels des Federelements 2 gezeigt.
In der Figur 3 ist der Beginn des Einschnappens des Federelements 2 in eine Ringnut des Gehäuseteils 1 gezeigt, wobei das Federelement 2 an einer Fase der Ringnut entlang gleitet.
In der Figur 4 ist das in die Ringnut des Gehäuseteils eingeschnappte Federelement 2 gezeigt.

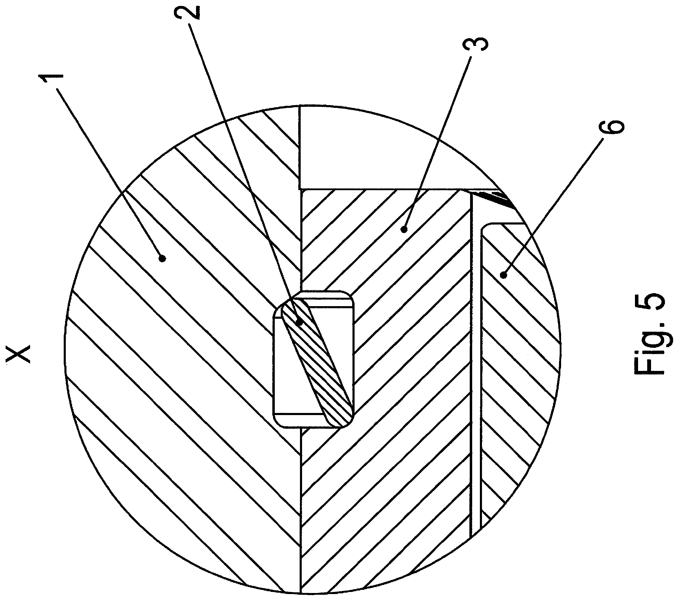

In der Figur 5 ist ein vergrößerter Ausschnitt der Figur 1 gezeigt.
In der Figur 6 ist das Federelement 2 in Seitenansicht, in Draufsicht und in Schrägansicht gezeigt.
In der Figur 7 ist ein anderes Federelement 2 in Seitenansicht, in Draufsicht und in Schrägansicht gezeigt.
In der Figur 8 ist ein weiteres Federelement 2 in Draufsicht gezeigt.

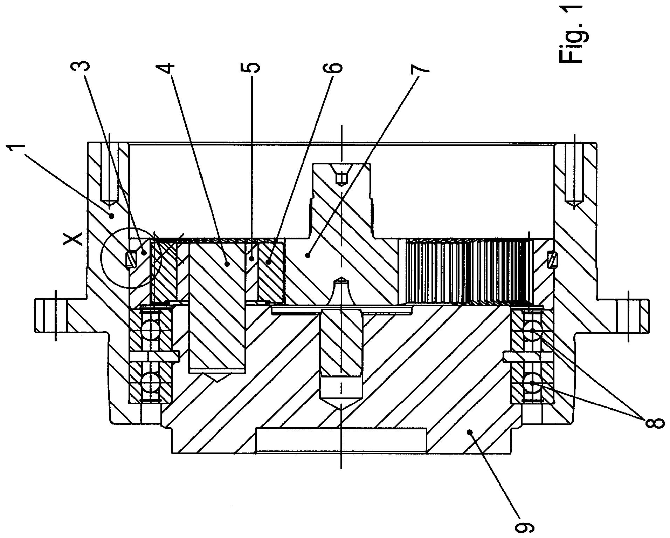

Wie in Figur 1 gezeigt, weist das Planetengetriebe ein innenverzahntes Hohlrad 3 auf, das in einem Gehäuseteil 1 des Planetengetriebes formschlüssig verbunden angeordnet ist.

Mit der Innenverzahnung des Hohlrades 3 sind die Verzahnungen der Planetenräder 6 im Eingriff.

Die Planetenräder 6 sind jeweils über Lager 5, insbesondere Nadellager, drehbar gelagert auf Planetenradachsen, die in einen Planetenradträger 9 eingepresst sind.

Der Planetenradträger 9 ist mittels zweier Lager 8 drehbar gelagert in dem Gehäuseteil 1.

Die Verzahnungen der Planetenräder 6 stehen auch im Eingriff mit der Verzahnung eines Sonnenrades 7, welches ebenfalls drehbar gelagert ist, insbesondere relativ zum Gehäuseteil 1.

Die Drehachse des Planetenradträgers 9 und die Drehachse des Sonnenrades 7 sind koaxial zueinander ausgerichtet.

Am äußeren Umfang des Hohlrades 3 ist eine in Umfangsrichtung umlaufende Ringnut eingebracht; ebenso ist in der Innenseite des Gehäuseteils 1 eine Ringnut eingebracht.

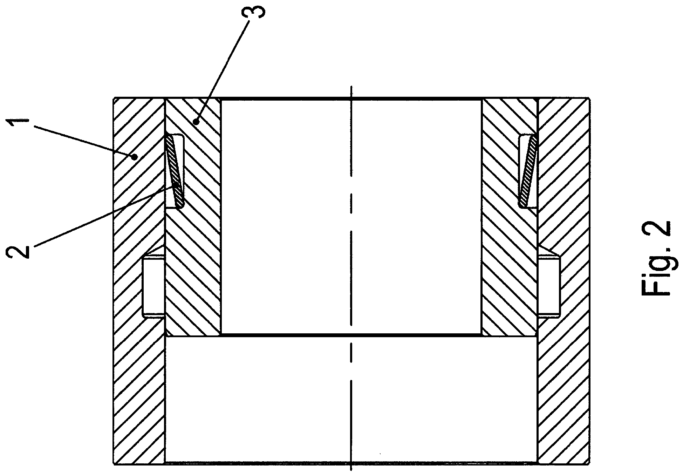

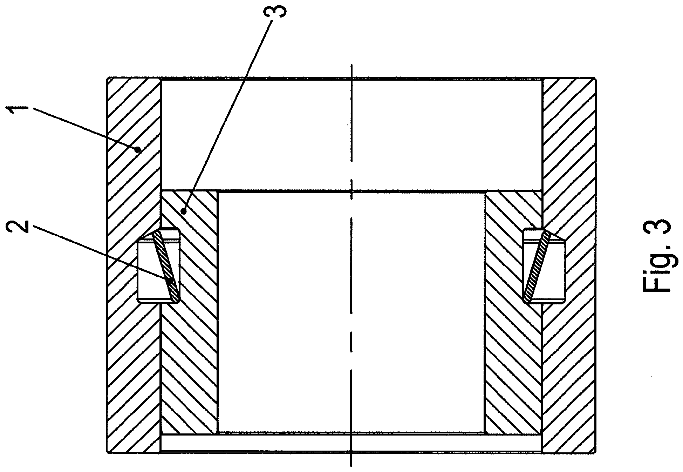

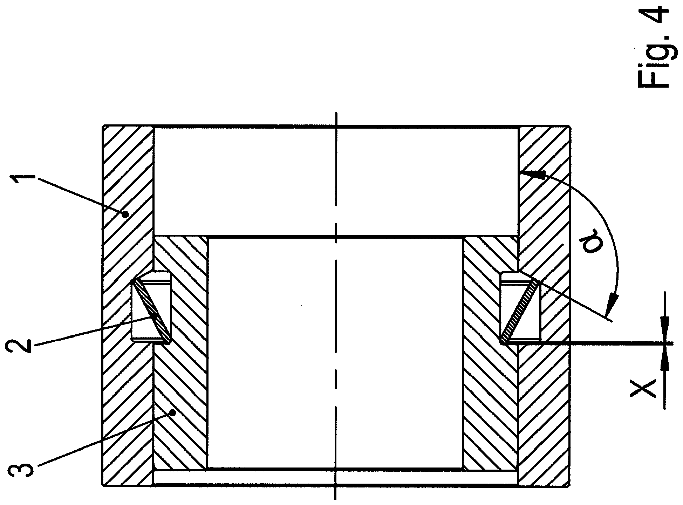

Wie in den Figuren 2 bis 4 gezeigt, wird bei der Montage das Federelement 2 in der Ringnut des Hohlrades 3 angeordnet und beim Einschieben in die für die Aufnahme des Hohlrades 3 im Gehäuseteil 1 vorgesehene Bohrung elastisch derart verformt, dass es gänzlich in der Ringnut des Hohlrades sich befindet.

Die im Gehäuseteil 1 eingebrachte Ringnut weist an ihrem einen axialen Randbereich eine Fase, also in Umfangsrichtung umlaufende Schrägung, auf.

Sobald diese Fase beim Einschieben des Hohlrades 3 in das Gehäuseteil 1 in den axialen Bereich der Ringnut des Gehäuseteils 1 kommt, beginnt das Federelement 2 sich zu entspannen und gleitet mit seinem ersten axialen Endbereich an der Fase entlang zunehmend in die Ringnut des Gehäuseteils 1.

Im entspannten Zustand überlappt der vom Federelement 2 überdeckte auf die Drehachse des Planetenradträgers 9 bezogenen Radialabstandsbereich sowohl mit dem vom Hohlrad 3 überdeckten Radialabstandsbereich als auch mit dem vom Gehäuseteil 1 überdeckten Radialabstandsbereich, insbesondere in dem vom Federelement 2 überdeckten axialen Bereich.

Vorzugsweise ist das Federelement 2 axial vorgespannt, so dass also Hohlrad 3 und Gehäuseteil 1 axial auseinander gedrückt werden. Das Federelement 2 erzeugt somit eine Federkraft, die auf das Hohlrad entgegen der axialen Richtung und auf das Gehäuseteil in axialer Richtung drückt.

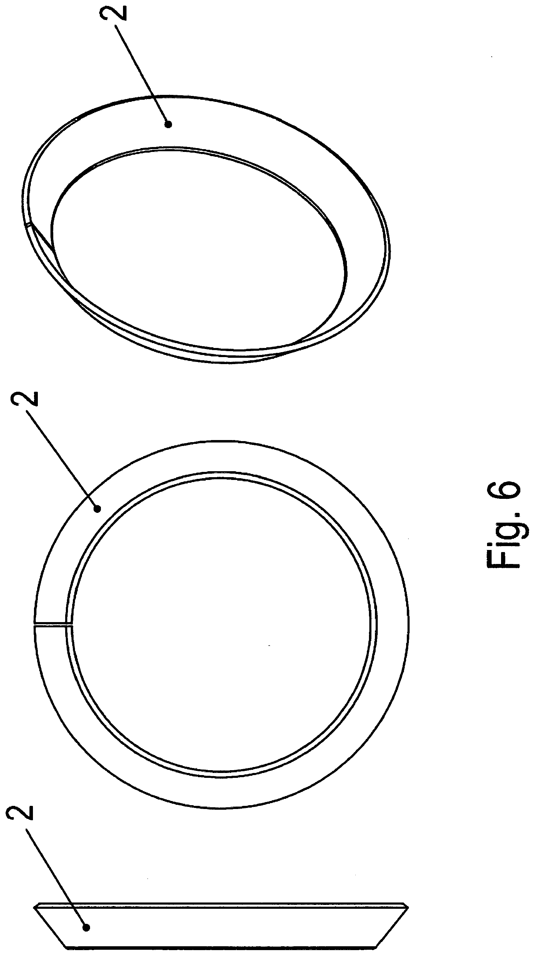

Wie in Figur 6 gezeigt, ist das Federelement 2 als Lochscheibe ausgeführt, also ringartig.

Die Ringachse der Lochscheibe ist koaxial zur Drehachse des Planetenradträgers 9 ausgeführt.

Der Innendurchmesser der Lochscheibe entspricht dem kleinsten Durchmesser der in das Hohlrad 3 eingebrachten Ringnut. Somit liegt der Innenrand der Lochscheibe am Boden der im Hohlrad 3 eingebrachten Ringnut an.

Der Außenrand der Lochscheibe liegt, nachdem er bei der Herstellung beim Entspannen des Federelements, also der Lochscheibe, entlang der Fase in die im Gehäuseteil eingebrachte Ringnut hineingedrückt wurde, an dem Nutboden der in das Gehäuseteil 1 eingebrachten Ringnut an.

Vom Innenrand der Lochscheibe aus zum Außenrand der Lochscheibe hin nimmt der von der Lochscheibe überdeckte radiale Bereich als Funktion des zugehörigen, von der Lochscheibe überdeckten axialen Bereichs monoton zu.

Vorzugsweise weist die Lochscheibe eine konstante Wandstärke auf.

Der von der Lochscheibe an einer jeweiligen axialen Position überdeckte Radialabstandsbereich verschiebt sich abhängig von einer zunehmenden axialen Position in axialer Richtung zu größeren Radialabständen monoton. Dies bedeutet, dass der an einer jeweiligen axialen Position kleinste Radialabstandswert der Lochscheibe in axialer Richtung monoton anwächst und dass der an einer jeweiligen axialen Position größte Radialabstandswert der Lochscheibe in axialer Richtung monoton anwächst.

Vorzugsweise entspricht der radial äußere Umfang der Lochscheibe einer Kegelstumpffläche und der radial innere Umfang der Lochscheibe entspricht ebenfalls einer Kegelstumpffläche.

Auf diese Weise ist das als Stanz-Biegeteil aus Blech, insbesondere Stahlblech, ausgeführt Federelement 2 in einfacher Weise elastisch verformbar.

Wie in Figur 6 gezeigt, weist das Federelement 2 zur einfacheren Verformung an einer Umfangsposition einen radial durchgehenden Schlitz auf. Somit ist die Verformbarkeit definiert ausführbar.

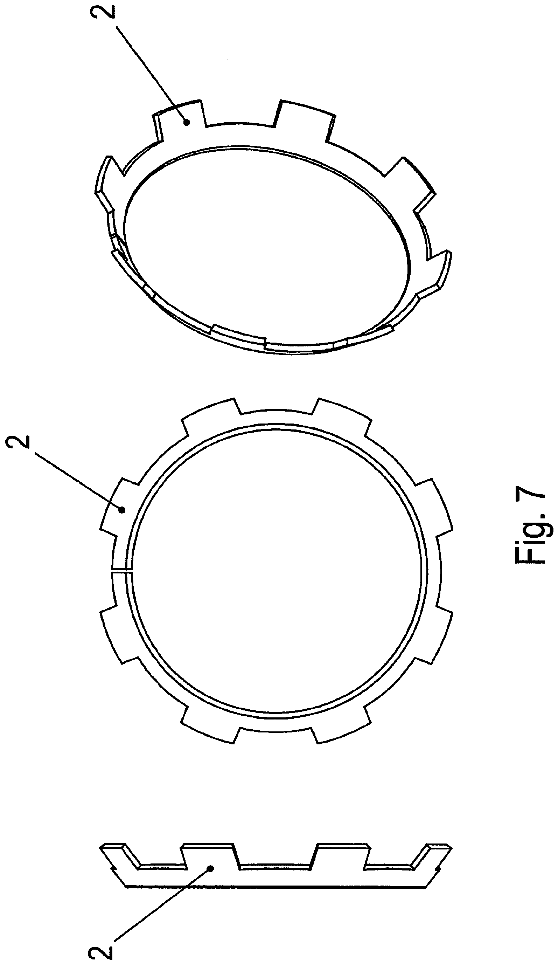

Wie in Figur 7 gezeigt, ist statt des zuvor beschriebenen Federelements 2 auch ein an seinem radial äußeren Rand verzahnt oder gezackt ausgeformten Federelement 2 verwendbar, welches ansonsten wiederum einer Lochscheibe gleicht. Die Erhebungen dieser Verzahnung sind in Umfangsrichtung regelmäßig voneinander beabstandet und in Umfangsrichtung rechteckförmig ausgeformt.

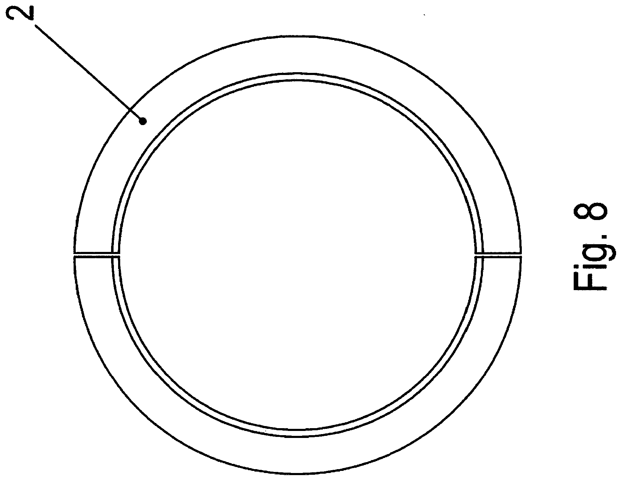

Wie in Figur 8 gezeigt, ist das Federelement 2 auch an mehr als einer Umfangsposition mit einem Schlitz, insbesondere mit einem radial durchgehenden Schlitz, ausführbar. Somit ist eine noch weiter verbesserte elastische Verformbarkeit erreichbar. Dieser zusätzliche Schlitz ist nicht nur bei dem Ausführungsbeispiel nach Figur 6, sondern auch bei dem Ausführungsbeispiel nach Figur 6 einsetzbar.

Vorzugsweise ist das Federelement 2 an seinem axial vorderen Bereich kreisgerundet ist und an seinem axial hinteren Bereich ebenfalls kreisgerundet.

### Bezugszeichenliste

1 Gehäuseteil
2 Federelement
3 Hohlrad, insbesondere innenverzahntes Hohlrad
4 Planetenradachse
5 Lager, insbesondere Nadellager
6 Planetenrad
7 Sonnenrad
8 Lager
9 Planetenradträger

## Patentansprüche

1. **Planetengetriebe mit Federelement (2) und mit in einem Gehäuseteil (1) aufgenommenen Hohlrad (3),**
**wobei das Federelement (2) in eine ins Gehäuseteil (1) eingebrachte Ringnut zumindest teilweise hineinragt,**
**wobei das Federelement (2) ringartig ausgeführt ist,**
**wobei die im Gehäuseteil (1) eingebrachte Ringnut an ihrem ersten axialen Endbereich eine Fase aufweist,**
**dadurch gekennzeichnet, dass**
**das Hohlrad (3) an seiner radial äußeren Oberfläche eine weitere Ringnut aufweist,**
**wobei in der weiteren Ringnut das Federelement (2) aufgenommen ist,**
**wobei das Federelement (2) einerseits am Boden der in das Hohlrad (3) eingebrachten weiteren Ringnut und andererseits an der Fase der im Gehäuseteil (1) angeordneten Ringnut abgestützt ist,**
**wobei das Federelement (2) an seinem radialen Innenumfang und/oder Außenumfang verzahnt oder gerändelt ausgeführt ist.**

2. **Planetengetriebe nach Anspruch 1,**
**dadurch gekennzeichnet, dass**
das Federelement (2) an seinem axial vorderen Bereich kreisgerundet ist und
das Federelement (2) an seinem axial hinteren Bereich kreisgerundet ist.

3. Planetengetriebe nach mindestens einem der vorangegangenen Ansprüche,
**dadurch gekennzeichnet, dass**
das Federelement (2) eine konstante Wandstärke aufweist.

4. Planetengetriebe nach mindestens einem der vorangegangenen Ansprüche,
**dadurch gekennzeichnet, dass**
das Federelement (2) ein Stanz-Biegeteil ist, insbesondere ein aus Stahlblech gefertigtes Stanz-Biegeteil.

5. Planetengetriebe nach mindestens einem der vorangegangenen Ansprüche,
**dadurch gekennzeichnet, dass**
das Federelement (2) an einer Umfangsposition einen radial durchgehenden Schlitz aufweist
oder dass das Federelement (2) an zumindest zwei Umfangspositionen jeweils einen radial durchgehenden Schlitz aufweist.

6. Planetengetriebe nach mindestens einem der vorangegangenen Ansprüche,
**dadurch gekennzeichnet, dass**
das Federelement (2) axial vorgespannt ist, so dass also Hohlrad (3) und Gehäuseteil (1) axial auseinander gedrückt werden,
so, dass einen Planetenradträger (9) lagernde, im Gehäuseteil (1) aufgenommene Lager gegen eine am Gehäuseteil (1) ausgeformten Stufe gedrückt und vorgespannt werden.

7. Planetengetriebe nach mindestens einem der vorangegangenen Ansprüche,
**dadurch gekennzeichnet, dass**
das Federelement (2) an seinem radialen Innenumfang und/oder Außenumfang verzahnt oder gerändelt ausgeführt ist, wobei die Zähne der Verzahnung in Umfangsrichtung regelmäßig voneinander beabstandet sind.

8. Planetengetriebe nach mindestens einem der vorangegangenen Ansprüche,
**dadurch gekennzeichnet, dass**
im Planetenradträger (9) Planetenbolzen aufgenommen sind, auf denen jeweils ein mittels jeweiligem Lager drehbar gelagertes Planetenrad (6) angeordnet ist,
wobei die Verzahnung des jeweiligen Planetenrads (6) mit der Innenverzahnung des Hohlrades im Eingriff ist und andererseits mit der Verzahnung eines relativ zum Gehäuseteil (1) drehbar gelagerten Sonnenrades im Eingriff ist,
wobei das Sonnenrad koaxial zum Planetenradträger (9) angeordnet ist.

## Claims

1. A planetary gear unit with spring element (2) and with a ring gear (3) accommodated in a housing part (1),
wherein the spring element (2) at least partially projects into a ring groove formed in the housing part (1),
wherein the spring element (2) is embodied in a ring-like manner,
wherein the ring groove formed in the housing part (1) has a chamfer on its first axial end region,
**characterised in that**
the ring gear (3) has a further ring groove on its radially outer surface,
wherein the spring element (2) is accommodated in the further ring groove,
wherein the spring element (2) is supported on one hand on the bottom of the further ring groove formed in the ring gear (3) and on the other hand on the chamfer of the ring groove arranged in the housing part (1),
wherein the spring element (2) is formed with gearing or knurling on its radial inner periphery and/or outer periphery.

2. A planetary gear unit according to claim 1,
**characterised in that**
the spring element (2) is circularly rounded on its axially front region and
the spring element (2) is circularly rounded on its axially rear region.

3. A planetary gear unit according to at least one of the preceding claims,
**characterised in that**
the spring element (2) has a constant wall thickness.

4. A planetary gear unit according to at least one of the preceding claims,
**characterised in that**
the spring element (2) is a stamped and bent part, in particular a stamped and bent part manufactured from steel sheet.

5. A planetary gear unit according to at least one of the preceding claims,
**characterised in that**
the spring element (2) has a radially continuous slot at a peripheral position
or **in that** the spring element (2) at at least two peripheral positions has in each case a radially continuous slot.

6. A planetary gear unit according to at least one of the preceding claims,
**characterised in that**
the spring element (2) is axially pre-loaded, so that the ring gear (3) and housing part (1) are therefore pushed axially away from one another,
such that bearings which mount a planet carrier (9) and are accommodated in the housing part (1) are pressed and pre-loaded against a step formed on the housing part (1).

7. A planetary gear unit according to at least one of the preceding claims,
**characterised in that**
the spring element (2) is formed with gearing or knurling on its radial inner periphery and/or outer periphery, with the teeth of the gearing being regularly spaced apart from each other in the peripheral direction.

8. A planetary gear unit according to at least one of the preceding claims,
**characterised in that**
planet pins are accommodated in the planet carrier (9), on each of which pins is arranged a planet wheel (6) rotatably mounted by means of a respective bearing,
wherein the gearing of the respective planet wheel (6) meshes with the internal gearing of the ring gear and on the other hand meshes with the gearing of a sun wheel rotatably mounted relative to the housing part (1),
wherein the sun wheel is arranged coaxially with the planet carrier (9).

## Revendications

1. Engrenage planétaire muni d'un élément de ressort (2) et d'une couronne (3) logée dans une partie de carter (1),
l'élément de ressort (2) faisant saillie au moins en partie dans une rainure annulaire ménagée dans la partie de carter (1),
l'élément de ressort (2) étant réalisé sous la forme d'un anneau,
la rainure annulaire ménagée dans la partie de carter (1) présentant un chanfrein au niveau de sa première zone d'extrémité axiale,
**caractérisé en ce que**
la couronne (3) présente une rainure annulaire supplémentaire au niveau de sa surface extérieure radiale,
l'élément de ressort (2) étant logé dans la rainure annulaire supplémentaire, l'élément de ressort (2) étant maintenu, d'une part, au niveau du fond de la rainure annulaire supplémentaire ménagée dans la couronne (3) et, d'autre part, au niveau du chanfrein de la rainure annulaire agencée dans la partie de carter (1),
l'élément de ressort (2) étant réalisé denté ou moleté au niveau de sa circonférence radiale intérieure et/ou extérieure.

2. Engrenage planétaire selon la revendication 1,
**caractérisé en ce que**
l'élément de ressort (2) est circulaire au niveau de sa zone avant axiale et
l'élément de ressort (2) est circulaire au niveau de sa zone arrière axiale.

3. Engrenage planétaire selon au moins l'une quelconque des revendications précédentes,
**caractérisé en ce que**
l'élément de ressort (2) présente une épaisseur de paroi constante.

4. Engrenage planétaire selon au moins l'une quelconque des revendications précédentes,
**caractérisé en ce que**
l'élément de ressort (2) est une pièce cintrée estampée, en particulier une pièce cintrée estampée en tôle d'acier.

5. Engrenage planétaire selon au moins l'une quelconque des revendications précédentes,
**caractérisé en ce que**
l'élément de ressort (2) présente une fente continue radiale au niveau d'une position circonférentielle ou **en ce que** l'élément de ressort (2) présente respectivement une fente continue radiale au niveau d'au moins deux positions circonférentielles.

6. Engrenage planétaire selon au moins l'une quelconque des revendications précédentes,
**caractérisé en ce que**
l'élément de ressort (2) est précontraint axialement, de sorte que la couronne (3) et la partie de carter (1) sont écartées axialement l'une de l'autre,
de sorte que des paliers logés dans la partie de carter (1) et supportant un porte-satellites (9) soient poussés et précontraints contre un gradin formé au niveau de la partie de carter (1).

7. Engrenage planétaire selon au moins l'une quelconque des revendications précédentes,
**caractérisé en ce que**
l'élément de ressort (2) est réalisé denté ou moleté au niveau de sa circonférence radiale intérieure et/ou extérieure, les dents de la denture étant espacées régulièrement les unes des autres dans la direction circonférentielle.

8. Engrenage planétaire selon au moins l'une quelconque des revendications précédentes,
**caractérisé en ce que**
des boulons planétaires sont logés dans le porte-satellites (9) sur lequel est agencée respectivement une roue planétaire (6) montée rotative au moyen de paliers respectifs, dans lequel la denture de la roue planétaire respective (6) vient en prise avec la denture intérieure de la couronne et d'autre part avec la denture d'une roue solaire montée rotative par rapport à la partie de carter (1),
la roue solaire étant agencée coaxialement par rapport au porte-satellites (9).
